# EUROPEAN PATENT APPLICATION

(11) **EP 1 975 491 A1**
(43) Date of publication of application: **01.10.2008**
(21) Application number: 08005602.1
(22) Date of filing: 26.03.2008
(51) Int. Cl.: F16L 3/13

(54) **Snap-acting clip, particularly for supporting conduits for the distribution of electricity**

(30) Priority: 29.03.2007 IT VI20070096
(71) Applicant: ELLEPI S.R.L., 36078 Valdagno VI (IT)
(72) Inventor: Peserico, Loredana, 36078 Valdagno (Vicenza) (IT)
(74) Representative: Forattini, Amelia

(57) **Abstract**

A snap-acting clip (1), for supporting wire conduits, has a base (2) provided with a fixing slot (4), and a brace-like support (3) protruding from the base (2), the support (3) detachably engaging a portion of pipe or cable (7) by snap action and comprises an engagement means for joining to the snap-acting clip (1) a tie strap (40) which cooperates with the brace-like support (3) in order to retain the conduit (7) more securely.

## Description

The present invention relates to a snap-acting clip, particularly for supporting conduits for the distribution of electricity.

The conduits of wiring systems for the distribution of electricity are generally mounted on walls or ceilings by means of supports constituted by collars, staples, U-bolts, made of galvanized steel and, more recently, by snap-acting clips.

Generally, snap-acting clips are installed on walls with the aid of expansion screw anchors. The clips engage the conduits that include and protect the electrical wires.

Such clips are very practical and their use also quite widespread. However, conventional clips have drawbacks, the most significant of which arises during the provision of ceiling-mounted systems and consists of the possibility that in particular environmental conditions, or under the action of the weight of the electrical conductors, the snap-acting clips become deformed, no longer being able to retain the sheaths and accordingly releasing them.

In order to obviate such drawback, at least partly, collar-type clips have been devised which again are made of thermoplastic material and are substantially composed of a base, which can be secured to the wall by an expansion screw anchor, and a pair of deformable bands, which are joined monolithically to the base and can be associated with each other detachably in order to surround and retain the pipe or sheath.

Another solution to the drawback cited above is represented by band clips, constituted by a base, which has a slightly cylindrical contour and can be fastened to the wall by an expansion screw anchor, and by a deformable band. The band is provided with a rack and can be associated with the base in the same manner as ordinary cable clamps, in order to surround and retain the pipe or the sheath.

The above described clips are more suitable for providing ceiling-mounted systems than normal snap-acting clips, however their use requires in practice particular manual skill, and forces installation technicians to hold the conduit with one hand and tighten as best they can the deformable bands with the other hand. Such operation is uncomfortable and timeconsuming.

It should also be noted that collar-type clips are sometimes subject to accidental opening of the deformable bands, while band clips tend to break at the connecting point between the base and the deformable band, when they are not made of polyamide but of ordinary cheaper thermoplastic materials.

The aim of the invention is to solve the problems described above by providing a snap-acting clip, which can securely retain wire conduits and is particularly suitable for providing ceiling-mounted wiring systems.

Within the scope of this aim, a particular object of the invention is to provide a snap-acting clip which allows to reduce the installation time of the wiring system.

Another object of the invention is to provide a snap-acting clip which complies with the necessary safety standards and regulations.

Another object of the invention is to provide a snap-acting clip which is simple to manufacture and is advantageous from a purely economic standpoint.

This aim and these and other objects which will become better apparent hereinafter are achieved by a snap-acting clip, particularly for supporting conduits for the distribution of electricity, comprising a base having a fixing slot, at least one brace-like support protruding from said base, said support being suitable to detachably engage a portion of conduit by snap action, characterized in that it comprises an engagement means, for joining at least one tie strap to said snap-acting clip, said tie strap being adapted to cooperate with said brace-like support in order to retain said conduit portion.

Further characteristics and advantages of the invention will become better apparent from the following detailed description of preferred but not exclusive embodiments of a snap-acting clip according to the invention, illustrated by way of non-limiting example in the accompanying drawings, wherein:
Figure 1 is a perspective view of a snap-acting clip according to the invention;
Figure 2 is another perspective view of the snap-acting clip of the preceding figure;
Figure 3 is a perspective view of a snap-acting clip according to a further aspect of the invention;
Figure 4 is another perspective view of the clip of the preceding figure;
Figure 5 is a perspective view of the clip of Figures 3 and 4 in an example of application;
Figure 6 is a sectional side view of the clip of Figures 3-5 installed on a wall;
Figure 7 is another side view of the clip of Figure 6.

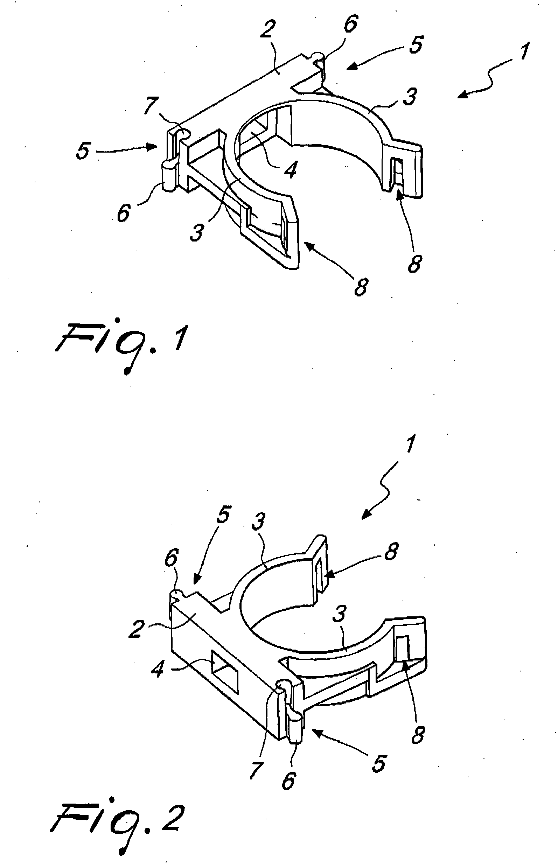

With particular reference to Figures 1 and 2, a snap-acting clip, particularly for pipes and cables, generally designated by the reference numeral 1, is preferably made of thermoplastic material, which can optionally also be fire-retardant and self-extinguishing. The clip comprises a base 2, from which two brace-like supports 3 protrude which are slightly arc-like and are suitable to partially surround and engage with a snap-action and detachably a conduit portion 20.

A fixing slot 4 is formed centrally with respect to the base 2 and is contoured so as to allow the insertion of a fastening screw 50 and the anchoring of the snap-acting clip 1 to a wall 30. On each of the two opposite front faces of the base 2 there are connecting members 5 constituted by a male portion 6 and a female portion 7, which are mutually complementary and are formed so as to allow to detachably engage with a snap action two or more contiguous snap-acting clips 1.

According to the invention, the snap-acting clip 1 has an engagement means which allows to join at least one tie strap 40, which is suitable to cooperate with the brace-like supports 3 to retain the conduit portion 20.

The engagement means is constituted by a pair of holes 8, which are formed at the free ends of the brace-like supports 3 with such shapes and dimensions such as to allow the fastening of one or more tie straps 40 without accidental breakage.

Preferably, according to a further aspect of the invention not shown in the accompanying figures, the engagement means can also include a through opening formed in the base 2 longitudinally, so as to affect the fixing slot 4 at such a height that the tie strap 40, during its passage, does not interfere with the fastening screw 50 although it completely surrounds the portion of pipe or cable 20. The pair of holes 8 can be replaced with a pair of substantially U-shaped supports which are formed at the free end of the brace-like supports 3 with such dimensions as to accommodate one or more tie straps 40 without accidental lateral sliding, or with a pair of slots which have a substantially U-shaped profile of the transverse cross-section and are formed at the outer surface of each brace-like support 3 with such dimensions as to accommodate one or more tie straps 40 without accidental lateral sliding.

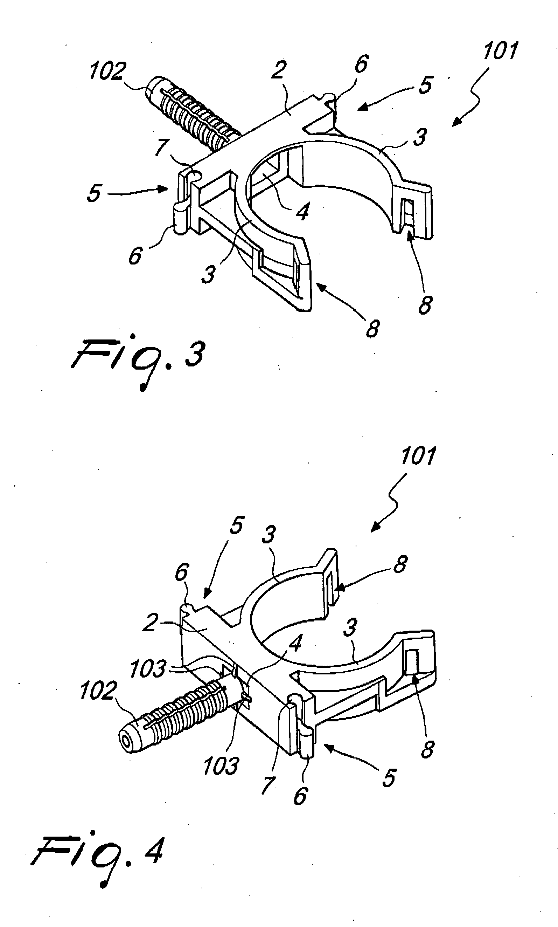

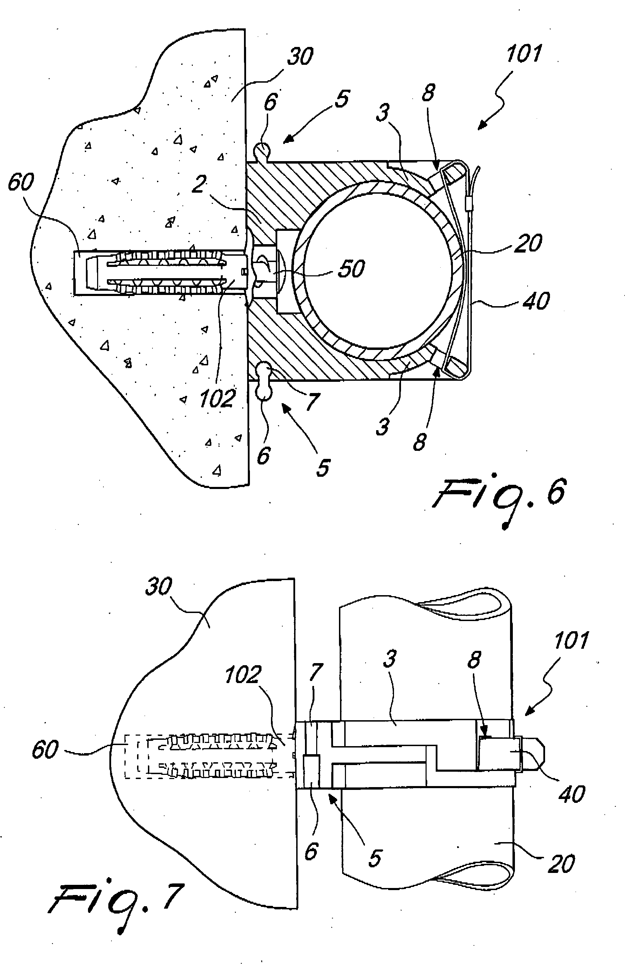

According to another aspect of the invention, illustrated in Figures 3 to 7, the snap-acting clip, designated by the reference numeral 101, comprises an expansion screw anchor 102 which is joined monolithically to the base 2.

The anchor 102 is of the type described in Italian patent application No. V12005A000196,

The expansion screw anchor 102 is joined to the base 2 by a plurality of breakable joints 103, which if necessary can be broken by a torsion or a slight blow, and are formed between the base 2 and the end of the screw anchor 102 that protrudes from the hole 60 formed in the wall 30, so as to keep the longitudinal axis of the expansion screw anchor 102 substantially coaxial to the center of the fixing slot 4.

In the embodiment shown in Figures 3 to 7, the elements that correspond to the elements that have already been described with reference to the embodiment shown in Figures 1 and 2 have been designated by the same reference numerals.

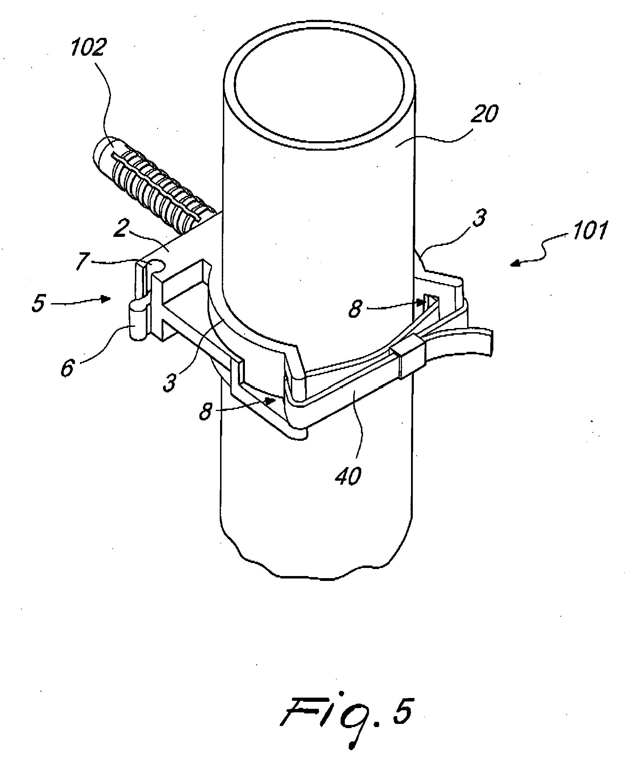

The use of the snap-acting clip 1 according to the invention is evident from what has been described and illustrated, and in particular it is evident that after anchoring it to the wall 30 and after engaging with a snap action and detachably the portion of pipe or cable 20 with the brace-like supports 3, it is sufficient to insert the tie strap 40 in the holes 8 and fasten it to itself, as shown in the accompanying Figures 5 to 7.

If the previously described through opening is also present in the base 2, it is sufficient to insert the tie strap 40 respectively in the first hole 8, in the through opening, in the second hole 8 and then fasten it, fully surrounding the conduit portion 20 or, more simply, insert the tie strap 40 in the through opening and accommodate it within the supports or in the slots described earlier, and then fasten it, completely surrounding the conduit portion 20 without accidental lateral sliding.

The use of the other embodiments of the snap-acting clip according to the invention is substantially identical to the one described above.

In practice it has been found that the snap-acting clip according to the invention fully achieves the intended aim and objects, since it is capable of retaining pipes and cables safely and is particularly suitable for providing ceiling-mounted systems.

The snap-acting clip according to the invention allows to reduce the production times of exposed systems.

The snap-acting clip thus conceived is susceptible of numerous modifications and variations, within the scope of the appended claims. All the details may be replaced with other technically equivalent elements.

This application claims the priority of Italian Patent Application No. Vl2007A000096, filed on March 29, 2007, the subject matter of which is incorporated herein by reference.

In practice, the materials used, so long as they are compatible with the specific use, as well as the contingent shapes and dimensions, may be any according to the requirements and the state of the art.

## Claims

1. A snap-acting clip, particularly for supporting conduits for the distribution of electricity, comprising a base having a fixing slot, at least one brace-like support protruding from said base, said support being suitable to detachably engage a portion of conduit by snap action, **characterized in that** it comprises an engagement means, for joining at least one tie strap to said snap-acting clip, said tie strap being adapted to cooperate with said brace-like support in order to retain said conduit portion.

2. The snap-acting clip according to claim 1, **characterized in that** said engagement means comprises at least one hole which is formed at the free end of said brace-like support, said hole being adapted to receive said tie strap.

3. The snap-acting clip according to claim 1, **characterized in that** said engagement means comprises at least one through opening, which is formed longitudinally at said base so as to affect said fixing slot at such a height as to allow the passage of said tie strap even after installing said snap-acting clip, said through opening being adapted to receive said tie strap.

4. The snap-acting clip according to claim 1, **characterized in that** said engagement means comprises at least one substantially U-shaped support which is formed at the free end of said brace-like support, said support being suitable to accommodate said tie strap.

5. The snap-acting clip according to claim 1, **characterized in that** said engagement means comprises at least one slot having a transverse cross-section with a substantially U-shaped profile, said slot being formed at the outer surface of said brace-like support, said slot being adapted to receive said tie strap.

6. The snap-acting clip according to claim 1, **characterized in that** it comprises an expansion screw anchor which is joined monolithically to said base by a plurality of breakable joints, said joints being formed between said base and an end of said expansion screw anchor that protrudes from a hole formed in a wall, the longitudinal axis of said expansion screw anchor being substantially coaxial to the center of said fixing slot.

7. The snap-acting clip according to claim 1, **characterized in that** said base comprises connecting members which are formed on the two opposite front faces of said base and are adapted to detachably engage by snap action contiguous snap-acting clips, each of said connecting members being constituted by a male portion and a female portion which are mutually complementary.

8. The snap-acting clip according to claim 7, **characterized in that** each male portion formed on one of said two front faces is matched by a female portion formed on the opposite front face.

9. The snap-acting clip according to one or more of the preceding claims, **characterized in that** said base, said brace-like support and said expansion screw anchor are made of thermoplastic material.

10. The snap-acting clip according to one or more of the preceding claims, **characterized in that** said base, said brace-like support and said expansion screw anchor are made of fire-retardant material.

11. The snap-acting clip according to one or more of the preceding claims **characterized in that** said base, said brace-like support and said expansion screw anchor are made of self-extinguishing material.
